Europäisches Patentamt

European Patent Office

Office européen des brevets

(19)

(11) Veröffentlichungsnummer: **0 001 431**
**B1**

(12) **EUROPÄISCHE PATENTSCHRIFT**

(45) Veröffentlichungstag der Patentschrift: **26.08.81**

(21) Anmeldenummer: **78101005.3**

(22) Anmeldetag: **27.09.78**

(51) Int. Cl.³: **C 09 D 5/40,** C 25 D 13/06,
C 08 L 63/00

(54) **Kathodisch abscheidbare Elektrotauchlackbindemittel.**

(30) Priorität: **01.10.77 DE 2744360**

(43) Veröffentlichungstag der Anmeldung:
**18.04.79 Patentblatt 79/8**

(45) Bekanntmachung des Hinweises auf die Patenterteilung:
**26.08.81 Patentblatt 81/34**

(84) Benannte Vertragsstaaten:
**DE FR GB**

(56) Entgegenhaltungen:
**DE - A - 2 320 301**

(73) Patentinhaber: **BASF Aktiengesellschaft**
**Carl-Bosch-Strasse 38**
**D-6700 Ludwigshafen (DE)**

(72) Erfinder: **Marx, Matthias, Dr.**
**Seebacher Strasse 49**
**D-6702 Bad Duerkheim 1 (DE)**
Erfinder: **Gulbins, Erich, Dr.**
**Ladenburger Strasse 80**
**D-6900 Heidelberg-Neuenheim (DE)**

Courier Press, Leamington Spa, England.

# 0 001 431

## Kathodisch abscheidbare Elektrotauchlackbindemittel

Die vorliegende Erfindung betrifft kathodisch abscheidbare Elektrotauchlackbindemittel auf Basis von Aminogruppen enthaltenden Polykondensationsprodukten, die zumindest teilweise in Form ihrer Ammonium- oder quartären Ammoniumsalze vorliegen.

Kathodisch abscheidbare Elektrotauchlackbindemittel sind bereits bekannt und auch schon in einer Reihe von Patentschriften beschrieben.

Der Korrosionsschutz von Beschichtungen, die aus wäßrigen Lacken hergestellt werden, ist im wesentlichen begrenzt durch hydrophile Gruppen, die selbst nach dem Einbrennen noch in den Bindemitteln zurückbleiben.

Aufgabe der vorliegenden Erfindung ist es, kathodisch abscheidbare Elektrotauchlackbindemittel aufzuzeigen, mit denen sich besonders vorteilhafte Einbrennlackierungen erzielen lassen und die verbesserten Korrosionsschutz ergeben.

Diese Aufgabe wird erfindungsgemäß dadurch gelöst, daß die als Bindemittel verwendeten Polykondensate B-Aminoketongruppen enthalten.

Gegenstand der vorliegenden Erfindung sind kathodisch abscheidbare Elektrotauchlackbindemittel auf Basis von Aminogruppen enthaltenden Polykondensationsprodukten, die zumindest teilweise in Form ihrer Ammonium- oder quartären Ammoniumsalze vorliegen, die dadurch gekennzeichnet sind, daß die Aminogruppen enthaltenden Polykondensationsprodukte durch Anlagerung von P-Hydroxyacetophenon an Polymere mit Epoxidgruppen und anschließende Umsetzung dieser Anlagerungsprodukte mit Formaldehyd und sekundärem Amin erhalten worden sind.

Bevorzugt sind erfindungsgemäße kathodisch abscheidbare Elektrotauchlackbindemittel, daren Aminogruppen enthaltenden Polykondensationsprodukte einen Stickstoffgehalt von 0,1 bis 15 Gewichtsprozent aufweisen.

Bevorzugt sind auch Kombinationen der erfindungsgemäßen Lackbindemittel mit Aminoplast- und Phenoplastharzen, Epoxidharzen oder modifizierten Harzen der genannten Art.

Polymere mit $\beta$-Aminoketongruppe sind bereits in anderem Zusammenhang beschrieben. So ist z.B. aus DE-A 10 23 583 bekannt, durch Radikalkettenpolymerisation vernetzte Polymere mit Aminoketongruppen herzustellen, welche den Stickstoff in quaternärer Form enthalten. Diese Polymeren werden als Ionenaustauscher verwendet. Für Lackzwecke kommen sie nicht in Betracht, da sie unlöslich sind.

Aus dem japanischen Patent 9 129 539 sind durch radikalische Initiierung hergestellte Mischpolymerisate mit Aminoketongruppen bekannt, die für die Herstellung elektrophotographischer Entwickler verwendet werden.

Ferner sind Polystyrole mit Aminoketongruppen in p-Stellung aus Chemical Abstracts *72*, 89971 Z und *69*, 78078a bekannt.

Keiner dieser Veröffentlichungen waren jedoch B-Aminoketongruppen enthaltende Polykondensationsprodukte zu entnehmen, die als wäßrige Lackbindemittel verwendbar sind.

Auch polymere ß-Aminester, wie sie z.B. in der DE-C 22 23 241 beschrieben sind, eignen sich nicht als kathodisch abscheidbare Elektrotauchlackbindemittel, da sie in wäßriger Lösung nicht ausreichend stabil sind und sich bei der Alterung der Elektrotauchlackbäder der Lack teilweise an der Anode statt an der Kathode abzuscheiden beginnt.

Mit den kathodisch abscheidbaren Elektrotauchlackbindemitteln gemäß der vorliegenden Erfindung erhält man dagegen stabile Elektrotauchbäder, die auch bei Alterung den Anforderungen entsprechen.

Ein besonderer Vorteil der erfindungsgemäßen Bindemittel ist, daß die damit erhaltenen Einbrennlackierungen einen ausgezeichneten Korrosionsschutz aufweisen. Bei der thermischen Lackhärtung werden die hydrophilen Gruppen des Bindemittels eliminiert und hydrophobe, durch wäßrige Agentien unangreifbare Überzüge erhalten.

Die Herstellung der erfindungsgemäßen $\beta$-Aminoketongruppen aufweisenden Polykondensationsprodukte erfolgt durch Anlagerung von p-Hydroxyacetophenon an Polymere mit Epoxidgruppen und anschließende Umsetzung mit Formaldehyd und einem sekundären Amin.

Geeignete Polymere mit Epoxidgruppen für die Herstellung der neuen Bindemittel sind Glycidäther mehrwertiger Alkohole und Phenole, z.B. von Glykol, Polyäthylenglykolen, Propylenglykol, Polypropylenglykolen, 1,4-Butylenglykol, 1,5-Pentandiol, 1,6-Hexandiol, 1,3,6-Hexantriol, Glyzerin, Pentaerythrit, Bis(4-hydroxyphenyl)2,2-propan, 4,4'-Dihydroxybenzophenon, Bis(2-hydroxynapththyl)-methan, 1,5-Hydroxynaphthalin, Bis(4-hydroxyphenyl)1,1-isobutan.

Besonders geeignet sind polymere Epoxidharze auf der Basis von 2,2-Bis(4-hydroxyphenyl)propan und Epichlorhydrin, wie sie im Handel erhältlich sind.

Geeignet sind auch Epoxidharze vom Typ des Glycidylisocyanurats, z.B. Triglycidylisocyanurat.

P-Hydroxyacetophenon wird mit dem epoxydgruppenhaltigen Polymeren im allgemeinen in einem Molverhältnis von 0,5 bis 1 : 1 (p-Hydroxyacetophenon/Epoxidgruppe), vorzugsweise 1 : 1 umgesetzt.

Als sekundäre Amine eignen sich insbesondere aliphatische Amine, wie Dimethylamin, Methyläthylamin, Diäthylamin usw. Bevorzugt sind solche aliphatischen Amine, die keine weiteren funktionellen Gruppen tragen. Die Reaktion kann sehr leicht auch mit Aminen durchgeführt werden, welche funktionelle Gruppen tragen, jedoch werden in dem Verfahren der vorliegenden Anmeldung hierbei in der Regel keine Vorteile erreicht. In manchen Fällen kann die durch OH-Gruppen verbesserte Wasserlöslichkeit oder Wasserdispergierbarkeit der Umsetzungsprodukte erwünscht sein.

Formaldehyd wird entweder als solcher, gegebenenfalls gelöst in Wasser oder niederen Alkoholen, wie z.B. in n-Butanol oder in Form Formaldehyd liefernder Verbindungen, wie z.B. Paraformaldehyd, eingesetzt.

Sekundäres Amin bzw. Formaldehyd werden mit dem Anlagerungsprodukt von p-Hydroxyacetophenon an epoxidgruppenhaltiges Polymer im allgemeinen in Molverhältnissen von 0.5 bis 1, vorzugsweise ca. 1 Mol sekundäres Amin bzw. 0.5 bis 1,2, vorzugsweise ca. 1 Mol Formaldehyd auf ca. 1 Mol des im Anlagerungsprodukt eingebauten p-Hydroxyacetophenons umgesetzt.

Der Gehalt der erfindungsgemäßen Bindemittel an $\beta$-Aminoketongruppen kann in weiten Grenzen variieren, beispielsweise in solchen Menge, die einem Stickstoffgehalt des Polymerisats bzw. Polykondensats von 0,1 bis 15, vorzugsweise 0,5 bis 10, insbesondere 1 bis 5 Gewichtsprozent, bezogen auf das Bindemittel, entsprechen.

Beispiele für bevorzugte erfindungsgemäße Lackbindemittel sind Umsetzungsprodukte auf der Basis von Epoxidharzen oder von Epoxidharzderivaten, wie man sie beispielsweise durch Umsetzung von Epoxidharzen mit p-Hydroxyacetophenon, Formaldehyd und sekundären Aminen erhält.

Die polymeren Basen auf der Grundlage der $\beta$-Aminoketone können durch teilweise oder vollständige Neutralisation mit anorganischen oder organischen Säuren oder durch Quaternieren, etwa nach DE-A 10 23 583 wasserverdünnbar oder echt wasserlöslich gemacht werden. Eine bevorzugte Form der Quaternierung besteht in der Umsetzung mit Epoxiden z.B. nach Methoden, wie sie in der DE-A 10 23 583 beschrieben sind oder mit Äthylenoxid, Propylenoxid, Butylenoxid, Glycid oder mit höhermolekularen Monoepoxiden, wie sie aus Di- oder Polyepoxiden durch teilweise Blockierung von Epoxidgruppen durch Anlagerung einer protonaktiven Verbindung (z.B. Phenol, Mercaptan, Amin, Säure) erhalten werden.

Zur (Teil-)Neutralisation der $\beta$-Aminoketonpolykondensate eignen sich anorganische Säuren, wie z.B. Phosphorsäure, Borsäure, Schwefelsäure oder Chlorwasserstoff oder vorzugsweise organische Säuren, wie z.B. Ameisensäure, Essigsäure, Propionsäure, Buttersäure oder Milchsäure.

Die erfindungsgemäßen Bindemittel eignen sich für die Herstellung wäßriger Einbrennlacke, insbesondere für kathodisch abscheidbare Elektrotauchlacke. Durch Einbrennen bei 140°C oder bei höheren Temperaturen verliert das Bindemittel die durch die basischen Gruppen bedingte Hydrophilie. Die Korrosionsschutzwirkung von Lackierungen aus solchen Bindemitteln ist verbessert und die Vernetzbarkeit des Bindemittels ist, sofern die Vernetzung säurekatalytisch abläuft, erleichtert.

Die erfindungsgemäßen Bindemittel können fremd- oder selbstvernetzend sein. Die Vernetzung kann über Amid-, Methylol-, Methyloläther-, Methylenamino-, Hydroxylgruppen usw. erfolgen, die in das polymere Bindemittel eingebaut sind. Als Vernetzer, die mit den reaktiven Gruppen des polymeren Bindemittels reagieren können, eignen sich vor allem Aminoplastharze, Phenolplastharze und verkappte Isocyanat oder Epoxidharze.

Zur Modifizierung bestimmter lacktechnischer Eigenschaften wie die Spülbarkeit des Naßlacks, des Lackumgriffes oder der Pigmentbenetzung können weitere Bindemittel mitverwendet werden, wie Polyester, Alkydharze, Cellulosederivate, trocknende oder nichttrocknende Öle, Naturharze, wie Kollophonium in unmodifizierter oder modifizierter Form sowie synthetische Mischpolymerisate mit unde ohne reaktionsfähige Gruppen.

Organische Lösungsmittel, wie z.B. Alkohole, auch höhere Alkohole, Ester, Ketone, Aromaten, können ebenfalls in untergeordneten Mengen anwesend sein, um das Abscheideverhalten und die Oberflächenbeschaffenheit elektrophoretisch abgeschiedener Filme zu verbessern.

Die wäßrigen Lösungen bzw. Dispersionen der erfindungsgemäßen zumindest teilweise als Salz vorliegenden Polykondensationsprodukte können weitere im Gemisch mit diesen elektrophoretisch abscheidbaren Hilfsstoffe enthalten, wie Pigmente, lösliche Farbstoffe, hochsiedende Lösungsmittel, Stabilisatoren, Antischaummittel und andere Hilfs- und Zusatzstoffe.

Die elektrophoretische Abscheidung erfolgt aus wäßrigem Medium an einer Kathode. Dazu wird zweckmäßigerweise mit Wasser oder Wasser/Lösungsmittel auf Feststoffgehalte zwischen 8 und 20 Gewichtsprozent verdünnt. Die Abscheidespannungen können zwischen wenigen Volt und einigen Tausend Volt betragen, doch werden in der Regel Abscheidespannungen zwischen 100 und 600 Volt angewendet. Nach dem Abspülen des auf der elektrisch leitenden Kathode abgeschiedenen Filmes wird dieser bei etwa 140 bis 190°C während 10 bis 30 Minuten eingebrannt.

Die erfindungsgemäßen Überzugsmittel ergeben Beschichtungen mit hervorragendem Korrosionsschutz und hervorragender Haftung sowohl auf eisen- bzw. zink-phosphatierten als auch auf unbehandelten metallischen Substraten. Der spezielle Vorteil der neuen Bindemittel gegenüber herkömmlichen besteht in der guten Durchhärtung der Lackfilme bei Vernetzung unter Einschluß von Methylol-, Methyloläther-, OH- und COOH-Gruppen bei relativ niedrigen Einbrenntemperaturen. Bei den bekannten kationischen Lackbindemitteln sind demgegenüber zur Härtung vielfach sehr hohe Temperaturen und relativ lange Einbrennzeiten erforderlich.

Die in den Beispielen angegebenen Teile und Prozente beziehen sich, soweit nicht anders angegeben, auf das Gewicht.

## Beispiel 1

760 Teile eines Epoxidharzes, das durch Umsetzung von 2,2 - Bis - (4 - hydroxyphenyl)propan mit Epichlorhydrin erhalten wurde und einen Epoxidwert (Mol Epoxid/100 g Harz) von 0,53 hat, wird bei 175°C mit 544 Teilen 4-Hydroxyacetophenon umgesetzt. Die Schmelze des Umsetzungsproduktes wird auf ein Kühlband ausgetragen. Nach de Abkühlen wird das feste Harz gemahlen (Umsetzungsprodukt I).

326 Teile dieses Pulvers, 44 Teile Dimethylamin, 33 Teile p-Formaldehyd und 60 Teile Eisessig werden bei 80°C so lange gerührt, bis das entstandene Produkt wasserlöslich geworden ist.

10 Teile des erhaltenen Umsetzungsproduktes und 3 Teile eines in Wasser unlöslichen Phenoplastharzes für die Vernetzung von Einbrennlacken werden unter Zusatz von 4 Teilen Äthylglykol homogen gelöst und in Wasser dispergiert. Eine 10%ige Dispersion des Bindemittelgemisches wurde in eine Elektrotauchlackierzelle gebracht, und auf einem zinkphosphatierten Karosserieblech wurde kathodisch bei einer Abscheidespannung von 350 Volt während 120 Sekunden eine Film abgeschieden. Nach dem Einbrennen, 30 Minuten bei 170°C, betrug die Filmdicke 17 $\mu$m, die Härte 6 H. Der Film war beständig gegen organische Lösungsmittel und wäßriges Alkali.

## Beispiel 2

326 Teile des Umsetzungsproduktes I, 44 Teile Dimethylamin, 33 Teile p-Formaldehyd und 30 Teile Eisessig werden bei 75 bis 85°C verrührt, bis das Gemisch wasserlöslich geworden ist. Dann werden 90 Teile Wasser zugegeben und in einem Druckgefäß Äthylenoxid aufgedrückt. Es werden 36 Teile Äthylenoxid von dem Reaktionsgemisch aufgenommen. Nun werden 100 Teile eines für Einbrennlacke üblichen Phenoplastharzes, 150 Teile Butylglykol und 20 Teile eines Polybutadienöles zugemischt und dann mit Wasser zu einer 10%igen Lackdispersion verdünnt.

Eine mit Eisenphosphat vorbehandelte Platte aus Karosserieblech wurde in dieser Dispersion kathodisch bei einer Spannung von 350 V während 2 Minuten beschichtet.

Anschließend wurde mit einem kräftigen Strahl entionisiertem Wasser abgespült und 30 Minuten bei 170°C eingebrannt. Beim Abspülen trat keinerlei Filmablösung auf und der eingebrannte Film war frei von Wassertropfenmarkierungen. Die Beschichtung hatte eine Stärke von 18 $\mu$m und haftete sehr fest auf der Unterlage. Sie bot einen sehr guten Karrosionsschutz sowohl im Salzsprühtest nach ASTM B 117—64 als auch in verschiedenen Testanordnungen zur Prüfung der "Filiform" — und der "Scab"-Korrosion.

## Beispiel 3

In der Lackdispersion nach Beispiel 2 wurde ein nicht vorbehandeltes Karosserieblech bei einer Spannung von 350 Volt während 2 Minuten kathodisch elektrotauchlackiert. Anschließend wurde, wie im Beispiel 2, mit entionisiertem Wasser abgespült und 30 Minuten bei 170°C eingebrannt.

Der Schichtdickenunterschied gegenüber der Lackierung auf eisenphosphatiertem Blech ist sehr gering; die Schichtdicke beträgt 20,5 $\mu$m.

Schweißnähte werden ebenfalls im Vergleich zur Umgebung sehr gleichmäßig, ohne Schaum- und Blasenbildung, beschichtet.

## Patentansprüche

1. Kathodisch abscheidbare Elektrotauchlackbindemittel auf Basis von Aminogruppen enthaltenden Polykondensationsprodukten, die zumindest teilweise in Form ihrer Ammonium- oder quartären Ammoniumsalze vorliegen, dadurch gekennzeichnet, daß die Aminogruppen enthaltenden Polykondensationsprodukte durch Anlagerung von p-Hydroxyacetophenon an Polymere mit Epoxidgruppen und anschließende Umsetzung dieser Anlagerungsprodukte mit Formaldehyd und sekundärem Amin erhalten worden sind.

2. Kathodisch abscheidbare Elektrotauchlackbindemittel nach Anspruch 1, dadurch gekennzeichnet, daß das Polykondensationsprodukt einen Stickstoffgehalt von 0,1 bis 15 Gewichtsprozent, bezogen auf das Bindemittel, aufweist.

3. Kathodisch abscheidbare Elektrotauchlackbindemittel nach einem der vorhergehenden Ansprüche, dadurch gekennzeichnet, daß das Aminogruppen enthaltende Polykondensationsprodukt durch Anlagerung von p-Hydroxyacetophenon an Polymere mit Epoxidgruppen im Molverhältnis von 0,5 bis 1 : 1 (p-Hydroxyacetophenon/Epoxidgruppe) und Umsetzung mit sekundärem Amin und Formaldehyd im Molverhältnis von 0,5 bis 1 Mol sekundäres Amin sowie 0,5 bis 1,2 Mol Formaldehyd, jeweils pro Mol eingebautes p-Hydroxyacetophenon, erhalten worden ist.

4. Kathodisch abscheidbares Elektrotauchlackbindemittel nach Anspruch 1, dadurch gekennzeichnet, daß es einen Zusatz eines Aminoplast- oder Phenoplastharzes enthält.

5. Kathodisch abscheidbares Elektrotauchlackbindemittel nach Anspruch 1, dadurch gekennzeichnet, daß es einen Zusatz eines Epoxidharzes oder eines verkappten Isocyanats enthält.

**O OO1 431**

6. Kathodisch abscheidbares Elektrotauchlackbindemittel nach einem der vorhergehenden Ansprüche, dadurch gekennzeichnet, daß das Polykondensationsprodukt einen Stickstoffgehalt von 0,5 bis 10 Gewichtsprozent, bezogen auf das Bindemittel, aufweist.

## Revendications

1. Liant pour peinture par électro-immersion, séparable cathodiquement, à base de produits de polycondensation contenant des groupes amino et qui se présentent, au moins partiellement, sous forme de leurs sels d'ammonium ou d'ammonium quaternaire, caractérisé par le fait que les produits de condensation contenant des groupes amino ont été obtenus par fixation de p-hydroxyacétophénone sur des polymères avec des groupes époxy, et ensuite réaction de ces produits d'addition avec du formaldéhyde et une amine secondaire.

2. Liant selon la revendication 1, caractérisé par le fait que le produit de polycondensation présente une teneur en azote de 0,1 à 15% en poids rapportée au liant.

3. Liant selon l'une des revendications 1 ou 2, caractérisé par le fait que le produit de polycondensation contenant des groupes amino a été obtenu par fixation de p-hydroxyacétophénone sur des polymères avec des groupes époxy, en proportions molaires de 0,5 à 1 : 1 (p-hydroxy-acétophénone/groupes époxy) et réaction avec une amine secondaire et du formaldéhyde, en rapport molaire de 0,5 à 1 mole d'amine secondaire, ainsi que 0,5 à 1,2 mole de formaldéhyde, chaque fois par mole de p-hydroxyacétophénone introduite.

4. Liant selon la revendication 1, caractérisé par le fait qu'il contient une addition d'une résine aminoplaste ou phénoplaste.

5. Liant selon la revendication 1, caractérisé par le fait qu'il contient une addition d'une résine époxy ou d'un isocyanate masqué.

6. Liant selon l'une des revendications 1 à 5, caractérisé par le fait que le produit de polycondensation possède une teneur en azote de 0,5 à 10% en poids, rapportée au liant.

## Claims

1. A cathodic electrocoating binder based on polycondensation products which contain amino groups and which, at least partially, are in the form of their ammonium salts or quaternary ammonium salts, characterized in that the polycondensation products containing amino groups have been obtained by adduct formation of p-hydroxyacetophenone with polymers containing epoxide groups, followed by reaction of these adducts with formaldehyde and a secondary amine.

2. A cathodic electrocoating binder as claimed in claim 1, characterized in that the polycondensation product has a nitrogen content of from 0.1 to 15 per cent by weight, based on the binder.

3. A cathodic electrocoating binder as claimed in any of the preceding claims, characterized in that the polycondensation product containing amino groups has been obtained by adduct formation of p-hydroxyacetophenone with polymers containing epoxide groups, in a molar ratio of from 0.5 : 1 to 1 : 1 (p-hydroxyacetophenone : epoxide group) and reaction of the adduct with a secondary amine and formaldehyde in a molar ratio of from 0.5 to 1 mole of secondary amine, and from 0.5 to 1.2 moles of formaldehyde, in each case per mole of p-hydroxyacetophenone contained in the adduct.

4. A cathodic electrocoating binder as claimed in claim 1, characterized in that it contains an added aminoplast resin or phenoplast resin.

5. A cathodic electrocoating binder as claimed in claim 1, which contains an added epoxy resin or capped isocyanate.

6. A cathodic electrocoating binder as claimed in any of the preceding claims, characterized in that the polycondensation product has a nitrogen content of from 0.5 to 10 per cent by weight, based on the binder.

5